# EUROPÄISCHE PATENTSCHRIFT

(11) **EP 3 551 853 B1**
(45) Veröffentlichungstag und Bekanntmachung des Hinweises auf die Patenterteilung: **09.12.2020**
(21) Anmeldenummer: 18707247.5
(22) Anmeldetag: 06.02.2018
(51) Int. Cl.: F01D 11/00, F01D 11/02, F01D 25/12

(54) **LEITSCHAUFEL FÜR EINE STRÖMUNGSMASCHINE**
GUIDE BLADE FOR A FLOW ENGINE
AUBE DIRECTRICE POUR UNE TURBOMACHINE

(30) Priorität: 10.02.2017 EP 17155609
(43) Veröffentlichungstag der Anmeldung: 16.10.2019
(73) Patentinhaber: Siemens Aktiengesellschaft, 80333 München (DE)
(72) Erfinder: BEECK, Alexander Ralph, Orlando, FL 32828 (US); BOLMS, Hans-Thomas, 13591 Berlin (DE)
(86) Internationale Anmeldenummer: PCT/EP2018/052879
(87) Internationale Veröffentlichungsnummer: WO 2018/146062

(56) Entgegenhaltungen:
- EP-A1- 1 167 695
- EP-A2- 1 211 384
- DE-A1-102006 004 437
- DE-A1-102011 055 375
- DE-A1-102014 101 360

## Beschreibung

Die vorliegende Erfindung betrifft eine Leitschaufel für eine Strömungsmaschine mit einem Schaufelblatt und zumindest einer Plattform, mit der das Schaufelblatt verbunden ist, wobei zur Kühlung der Plattform und des Schaufelblattes ein Kühlkanalsystem vorgesehen ist und wobei die Plattform an ihrer blattabgewandten Seite zumindest eine von der Plattform abstehende Dichtlippe für eine Abdichtung zu einem rotierenden System der Strömungsmaschine umfasst.

In Strömungsmaschinen, wie etwa Gasturbinen, werden Turbinenschaufeln eingesetzt. Man unterscheidet grundsätzlich zwischen rotierenden Laufschaufeln und stationären Leitschaufeln, die ein heißes fluides Arbeitsmedium, insbesondere Gas, in Richtung der Laufschaufeln leiten. Insbesondere durch die hohe Temperatur des fluiden Arbeitsmediums und dem damit verbundenen hohen Wärmeeintrag aus dem fluiden Arbeitsmedium in die Turbinenschaufeln, sind die Turbinenschaufeln während ihres Betriebs hohen thermischen Belastungen ausgesetzt. Hierdurch können sich Beschädigungen an den Turbinenschaufeln ergeben.

Um den hohen thermischen Belastungen von Turbinenschaufeln entgegenzutreten, werden Turbinenschaufeln zum einen häufig aus hochtemperaturfesten Metalllegierungen hergestellt. Zum anderen werden Turbinenschaufeln regelmäßig über ein Kühlkanalsystem aktiv mit einem Kühlfluid gekühlt. So ist es beispielsweise aus der DE 10 2011 055 375 A1 und aus der EP 1 167 695 A1 bekannt, nach stromab überstehende Plattformüberhänge hohl und somit kühlbar auszugestalten. Dabei kann eine kombinierte Prall- und Filmkühlung der Plattform zum Einsatz gelangen. Darüber hinaus offenbart die EP 1 211 384 A2 ein Verfahren zum Einbringen von schraubenförmigen Kühlkanälen in den Übergangsbereich einer Turbinenschaufel mittels einer wendelförmigen Erordierelektrode.

Vor diesem Hintergrund liegt der vorliegenden Erfindung die Aufgabe zugrunde, eine Leitschaufel der eingangs genannten Art mit einem effizienten Kühlkanalsystem bereitzustellen.

Zur Lösung dieser Aufgabe schafft die vorliegende Erfindung eine Leitschaufel der eingangs genannten Art, die dadurch gekennzeichnet ist, dass sich durch die Dichtlippe mindestens ein Kühlkanal erstreckt, der einen Teil des Kühlkanalsystems bildet. Auf diese Weise kann auch die Dichtlippe aktiv gekühlt werden, wodurch sich eine effiziente und gleichmäßige Kühlung der gesamten Plattform ergibt. Somit werden starke Temperaturschwankungen innerhalb des Materials vermieden, die zu thermischen Spannungen führen und die Leitschaufel beschädigen können.

Weiter ist eine Mehrzahl von Kühlkanälen vorgesehen, deren Austrittsöffnungen im freien Ende der Dichtlippe angeordnet sind. Die Kühlkanäle erstrecken sich jeweils ausgehend von einem freien Ende der Dichtlippe in zumindest im Wesentlichen radialer Richtung und somit parallel zur Abschlussfläche und insbesondere zumindest im Wesentlichen parallel zueinander durch die Dichtlippe. Durch mehrere Kühlkanäle, die sich auf die zuvor beschriebene Art und Weise erstrecken, wird eine besonders effiziente und gleichmäßige Kühlung der Dichtlippe erreicht. Zudem ergibt sich durch einen Austritt von Kühlluft aus den Kühlkanälen am freien, radial nach innen weisenden Ende der Dichtlippe während des bestimmungsgemäßen Einsatzes der Leitschaufel eine verbesserte Abdichtung des Spaltes zwischen der Dichtlippe und dem rotierenden System. Vorteilhaft ist zumindest ein Verbindungskanal beabstandet zu dem freien Ende der Dichtlippe vorgesehen, der die Mehrzahl von Kühlkanälen miteinander verbindet und ebenfalls einen Teil des Kühlkanalsystems bildet. Durch den Verbindungskanal, der sich bevorzugt in Umfangsrichtung erstreckt, kann das Kühlfluid den Kühlkanälen zentral zugeführt werden.

Gemäß einer Ausgestaltung der Erfindung ist die zumindest eine Dichtlippe in einem in axialer Strömungsrichtung vorderen oder hinteren Randbereich der Plattform angeordnet und steht zumindest im Wesentlichen radial von der blattabgewandten Seite der Plattform derart ab, dass sie eine Abschlussfläche der Plattform definiert.

Bevorzugt ist die Plattform aus einem Plattformbasisteil und zumindest einem damit verbundenen, bevorzugt angeschweißten oder angelöteten, Plattformzusatzteil zusammengesetzt, wobei der mindestens eine Kühlkanal und bevorzugt weitere Teile des Kühlkanalsystems zumindest teilweise durch das zumindest eine Plattformzusatzteil definiert ist/sind. Durch die mehrteilige, insbesondere zweiteilige, Ausbildung der Plattform lassen sich kleine Kühlkanäle ausbilden und somit insbesondere schmale Dichtlippen effektiv kühlen. Zudem werden der Guss und die mechanische Bearbeitung der Plattform durch die mehrteilige Ausbildung deutlich vereinfacht.

Vorteilhaft ist in dem Plattformbasisteil mindestens eine Nut, insbesondere eine gießtechnisch hergestellte Nut, vorgesehen, die durch ein Plattformzusatzteil in Form eines Blechs, insbesondere eines Metallblechs, abgedeckt ist, um zumindest den mindestens einen Kühlkanal zu definieren. Es ist somit möglich, in nur wenigen Arbeitsschritten eine Mehrzahl von Kühlkanälen auszubilden.

Die Plattform kann zwei unmittelbar benachbarte Dichtlippen an ihrer blattabgewandten Seite umfassen, die sich insbesondere zumindest im Wesentlichen parallel und beabstandet zueinander erstrecken.

Zweckmäßigerweise ist das Plattformzusatzteil in Form eines U-förmigen Profilblechs vorgesehen, das derart zwischen den beiden Dichtlippen angeordnet ist, dass dessen gegenüberliegende Schenkel an den Dichtlippen flächig anliegen und die mindestens eine Nut abdecken.

Alternativ kann das Plattformzusatzteil in Form eines U-förmigen Profilblechs vorgesehen sein, dessen erster Schenkel flächig an einer ersten der beiden Dichtlippen anliegt, um die darin vorgesehene mindestens eine Nut abzudecken, und dessen zweiter Schenkel mit einem Schenkel eines weiteren Plattformzusatzteils in Form eines Abschlussblechs verbunden, insbesondere daran geschweißt oder gelötet, ist, um die zweite der beiden Dichtlippen durch die beiden verbundenen Schenkel zu definieren.

Zusätzlich oder alternativ zu einer Löt- oder Schweißverbindung ist es auch möglich, dass das U-förmige Profilblech zwischen den beiden Dichtlippen oder zwischen der Dichtlippe und dem Schenkel des Abschlussblechs festgeklemmt und somit kraftschlüssig gehalten ist. Bei Erwärmung der Plattform während des Betriebs dehnt sich der Werkstoff des Profilblechs schneller als der der Plattform aus, was die kraftschlüssige Verbindung noch verstärkt.

Gemäß einer weiteren Alternative kann das Plattformzusatzteil in Form eines einteiligen Profilblechs mit einem U-förmigen Abschnitt, dessen erster Schenkel flächig an einer ersten der beiden Dichtlippen anliegt, um die darin vorgesehene mindestens eine Nut abzudecken, und dessen zweiter Schenkel die zweite der beiden Dichtlippen definiert, und einem sich daran anschließenden Abschlussblechabschnitt vorgesehen sein. Durch die einteilige Ausbildung des Profilblechs entfällt der Arbeitsschritt eines Verbindens eines Plattformzusatzteils in Form eines U-förmigen Profilblechs mit einem Plattformzusatzteil in Form eines Abschlussblechs mittels Löten oder Schweißen.

Alternativ zu der mindestens einen Nut in dem Plattformbasisteil, die durch ein Plattformzusatzteil in Form eines Blechs abgedeckt ist, um den mindestens einen Kühlkanal zu definieren, kann das Plattformzusatzteil additiv, bevorzugt mittels selektiven Laserschmelzens, SLM, hergestellt sein und zumindest den mindestens einen Kühlkanal vollständig definieren. Somit wird das Plattformzusatzteil inklusive des darin ausgebildeten mindestens einen Kühlkanals einteilig in einem Arbeitsgang hergestellt.

Durch die additive Fertigung kann das Plattformzusatzteil Kühlkanäle der unterschiedlichsten Formen aufweisen. Beispielsweise kann das Plattformzusatzteil sehr feine und/oder mikrostrukturartige Kühlkanäle aufweisen, die eine äußerst effiziente Nutzung des Kühlfluids, insbesondere Kühlluft, ermöglichen. Ebenso kann durch die additive Fertigung mindestens ein Turbulenzelement in den mindestens einen Kühlkanal eingebracht sein. Ein Turbulenzelement ermöglicht eine genaue Anpassung des Wärmeübergangs an die jeweilige Belastung der Plattform.

Zweckmäßigerweise definiert das additiv hergestellte Plattformzusatzteil eine vollständige Dichtlippe mit dem mindestens einen Kühlkanal. Das additiv hergestellte Plattformzusatzteil kann auch zwei über eine Verstrebung verbundene Dichtlippen und ein mit den Dichtlippen verbundenes Abschlussblech definieren.

Bevorzugt definiert das Plattformzusatzteil zusätzlich zu der Mehrzahl von Kühlkanälen zumindest teilweise auch den zuvor beschriebenen, die Mehrzahl von Kühlkanälen verbindenden Verbindungskanal oder weitere Teile des Kühlkanalsystems.

Das Plattformbasisteil und/oder das zumindest eine Plattformzusatzteil können aus einer Superlegierung, bevorzugt einer Nickelbasis-Superlegierung, hergestellt sein. Vorteilhaft sind das Plattformbasisteil und das zumindest eine Plattformzusatzteil aus demselben Material, insbesondere aus einer Superlegierung, bevorzugt einer Nickelbasis-Superlegierung, hergestellt. Der Vorteil einer Nickelbasis-Superlegierung ist, dass diese eine ausreichende Temperaturfestigkeit sowie Oxidations- und Temperaturbeständigkeit aufweist.

Alternativ zu der zuvor beschriebenen mehrteiligen Ausbildung der Plattform kann der zumindest eine Kühlkanal im Falle einer einteiligen Ausbildung der Plattform grundsätzlich auch als Bohrloch, insbesondere als ein mittels eines Erodiervorgangs eingebrachtes Bohrloch, ausgebildet sein.

Weitere Merkmale und Vorteile der vorliegenden Erfindung werden anhand der nachfolgenden Beschreibung von vier Ausführungsformen einer Leitschaufel für eine Strömungsmaschine gemäß der vorliegenden Erfindung unter Bezugnahme auf die beiliegende Zeichnung deutlich. Darin ist
- Figur 1: eine schematische Seitenansicht einer Leitschaufel gemäß einer ersten Ausführungsform der vorliegenden Erfindung;
- Figur 2: eine schematische Ansicht eines Teils der Plattform der in Figur 1 dargestellten Leitschaufel von schräg unten;
- Figur 3: eine schematische Ansicht eines Teils der Plattform der in Figur 1 dargestellten Leitschaufel mit sichtbaren Kühl- und Verbindungskanälen von schräg unten;
- Figur 4: eine schematische, vergrößerte Ansicht des in Figur 3 mit IV markierten Bereichs der Plattform;
- Figur 5: eine schematische Seitenansicht eines Teils der Plattform der in Figur 1 dargestellten Leitschaufel, teilweise im Schnitt;
- Figur 6: eine schematische Seitenansicht eines Teils der Plattform einer Leitschaufel gemäß einer zweiten Ausführungsform der vorliegenden Erfindung, teilweise im Schnitt;
- Figur 7: eine schematische Seitenansicht eines Teils der Plattform einer Leitschaufel gemäß einer dritten Ausführungsform der vorliegenden Erfindung, teilweise im Schnitt; und
- Figur 8: eine schematische Seitenansicht eines Teils der Plattform einer Leitschaufel gemäß einer vierten Ausführungsform der vorliegenden Erfindung, teilweise im Schnitt.

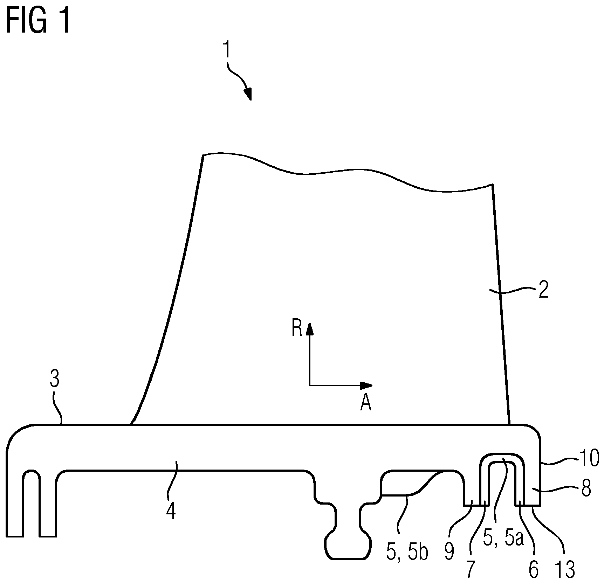

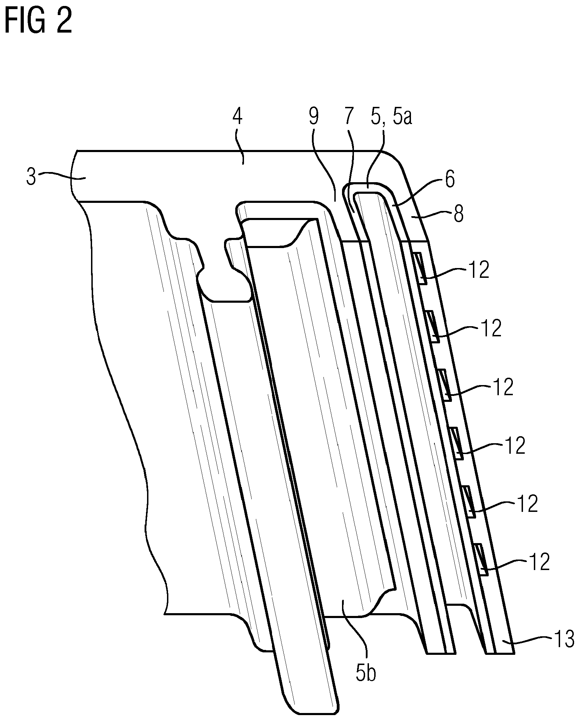

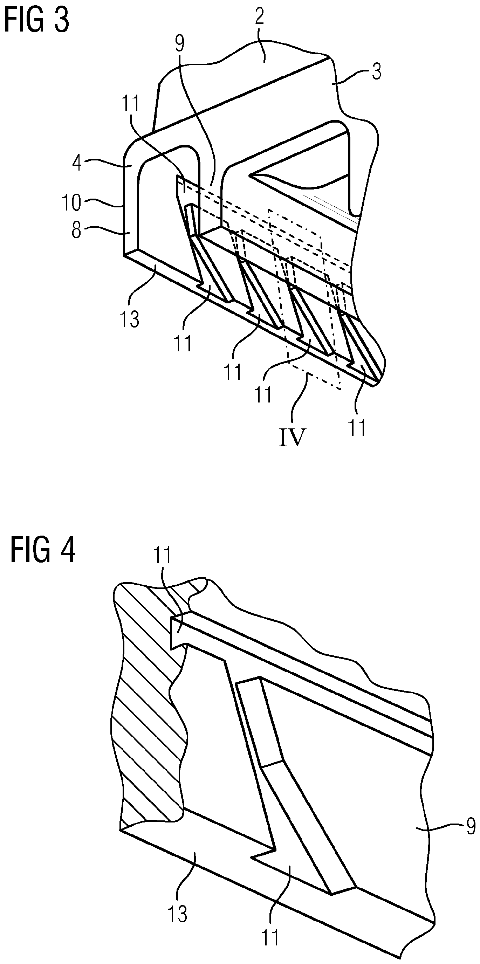

Die Figuren 1 bis 5 zeigen schematische Ansichten einer Leitschaufel 1 für eine Strömungsmaschine gemäß einer ersten Ausführungsform der vorliegenden Erfindung. Hierbei umfasst die Leitschaufel 1 ein Schaufelblatt 2 und eine Plattform 3, mit der das Schaufelblatt 2 verbunden ist. Die Plattform 3 ist aus einem Plattformbasisteil 4 und Plattformzusatzteilen 5 in Form eines U-förmigen Metallprofilblechs 5a mit zwei gegenüberliegenden Schenkeln 6, 7 und in Form eines Abschlussblechs 5b zusammengesetzt, die mittels Schweißen mit dem Plattformbasisteil 4 verbunden sind. Das Plattformbasisteil 4 umfasst an seinem in axialer Strömungsrichtung A hinteren Randbereich zwei unmittelbar benachbarte sowie sich parallel und beabstandet zueinander erstreckende Dichtlippen 8, 9 für eine Abdichtung zu einem rotierenden System der Strömungsmaschine, die radial von der blattabgewandten Seite der Plattform 3 von dieser abstehen. Die Dichtlippen 8, 9 sind somit radial nach innen weisende Dichtungspartner der Abdichtung, die als korrespondierenden Dichtungspartner eine nicht dargestellte Reibfläche oder eine ebenso gestaltete, jedoch nach außen weisende Dichtlippe umfasst. Der korrespondierende Dichtungspartner ist am Rotor angeordnet oder Teil einer Rotorschaufel. Die in axialer Strömungsrichtung A hinterste Dichtlippe 8 definiert eine Abschlussfläche 10 der Plattform 3.

In dem Plattformbasisteil 4, insbesondere in der in axialer Strömungsrichtung A hintersten Dichtlippe 8, sind gießtechnisch hergestellte Nuten 11 vorgesehen. Das U-förmige Metallprofilblech 5a ist derart zwischen den beiden Dichtlippen 8, 9 angeordnet, dass dessen gegenüberliegende Schenkel 6, 7 an den Dichtlippen 8, 9 flächig anliegen, wodurch die Nuten 11 durch das Metallprofilblech 5a abgedeckt werden. Entsprechend werden Kühlkanäle 12 sowohl durch das Plattformbasisteil 4 als auch durch das Metallprofilblech 5a definiert, die einen Teil eines Kühlkanalsystems zur Kühlung der Leitschaufel 1 bilden. Durch die zweiteilige Ausbildung der Plattform 3 lassen sich insbesondere dünne Dichtlippen 8, 9 effizient aktiv kühlen.

In der hier beschriebenen Ausführungsform sind in der Dichtlippe 8 sechs Kühlkanäle 12 ausgebildet, deren Austrittsöffnungen in einem radial nach innen weisenden freien Ende 13 der Dichtlippe 8 angeordnet sind. Von dort aus erstrecken sich die Kühlkanäle 12 jeweils ausgehend von der in axialer Strömungsrichtung A hintersten Dichtlippe 8 leicht schräg bezogen auf die radiale Richtung R, also in im Wesentlichen radialer Richtung R, und parallel zueinander durch die Dichtlippe 8.

Zudem umfasst das Kühlkanalsystem einen sich in Umfangsrichtung der Plattform 3 erstreckenden und beabstandet zu dem freien Ende 13 der Dichtlippe 9 vorgesehenen Verbindungskanal 14, in den die Kühlkanäle 12 münden, so dass diese miteinander verbunden sind. Der sich etwa in Umfangsrichtung der Plattform 3 erstreckende Verbindungskanal 14 ist über eine Mehrzahl von sich in axialer Strömungsrichtung A erstreckenden Verbindungskanälen 15 mit einem Sammelkanal 16 verbunden. Der Sammelkanal 16 ist zumindest teilweise durch ein weiteres Plattformzusatzteil 5 in Form eines Abschlussblechs 5b definiert, das mit dem Plattformbasisteil 4 mittels Schweißen verbunden ist. Die Verbindungskanäle 15 und der Sammelkanal 16 bilden ebenfalls einen Teil des Kühlkanalsystems.

Indem das Kühlkanalsystem nicht nur Kanäle innerhalb eines Hauptabschnitts der Plattform 3 sondern auch in der Dichtlippe 8 aufweist, wird eine möglichst gleichmäßige Kühlung der Plattform 3 erreicht und werden starke Temperaturschwankungen innerhalb des Materials der Plattform 3 vermieden.

Bei der zuvor beschriebenen Ausführungsform sind sowohl das Plattformbasisteil 4 als auch die Plattformzusatzteile 5 bzw. 5a und 5b aus derselben Nickelbasis-Superlegierung hergestellt.

Im Betrieb wird das Kühlfuid dem Kühlkanalsystem der Leitschaufel zugeführt, welches anschließend den Sammelkanal 16 und den Verbindungskanal 14 durchströmt und danach zur Kühlung der Dichtlippe 8 die Kühlkanäle 12 durchströmen kann. Aufgrund der im freien Ende 13 angeordneten Austrittsöffnungen trägt das Kühlfluid nach Verlassen der Leitschaufel abschließend zur Verbesserung der Abdichtung zwischen Stator und Rotor bei.

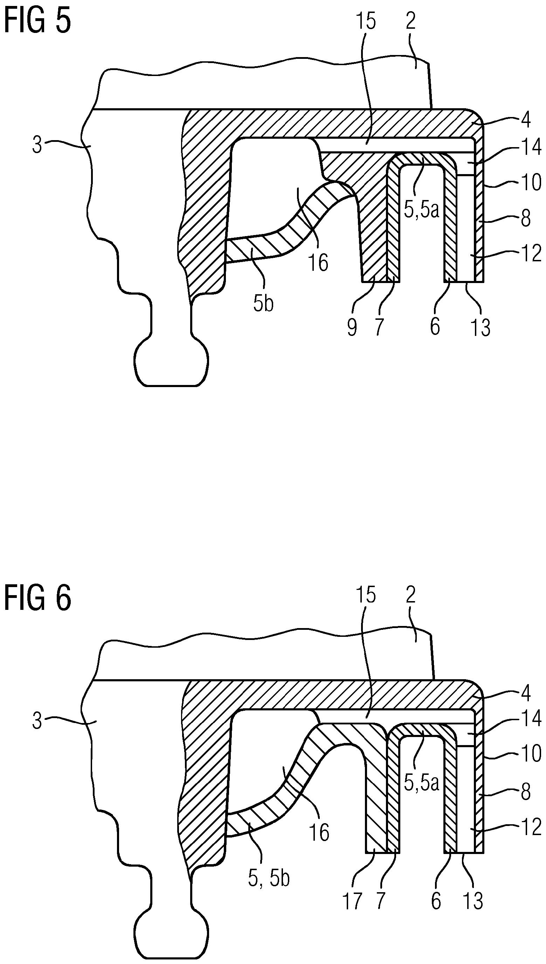

Die in der Figur 6 gezeigte zweite Ausführungsform einer erfindungsgemäßen Leitschaufel 1 entspricht im Wesentlichen der ersten Ausführungsform. Der einzige Unterschied besteht darin, dass bei der zweiten Ausführungsform das Plattformbasisteil 4 an seinem in axialer Strömungsrichtung A hinteren Randbereich nur die erste Dichtlippe 8 der beiden Dichtlippen 8, 9 umfasst. Wie bereits in der ersten Ausführungsform, liegt auch in der zweiten Ausführungsform der erste Schenkel 6 des U-förmigen Metallprofilblechs 5a flächig an der ersten Dichtlippe 8 an und ist mit dieser mittels Schweißen verbunden. Jedoch weist bei der zweiten Ausführungsform auch das Abschlussblech 5b einen Schenkel 17 auf, der mit dem zweiten Schenkel 7 des U-förmigen Metallprofilblechs 5a mittels Schweißen verbunden ist, um die zweite Dichtlippe 9 der beiden Dichtlippen 8, 9 zu definieren. In das Plattformbasisteil 4, insbesondere die erste Dichtlippe 8, sind Nuten 11 eingegossen, die durch das U-förmige Metallprofilblech 5a und das Abschlussblech 5b abgedeckt sind, um die sechs Kühlkanäle 12 und die Verbindungskanäle 14, 15 teilweise zu definieren. Zudem definiert das Abschlussblech 5b gemeinsam mit dem Plattformbasisteil 4 den Sammelkanal 16.

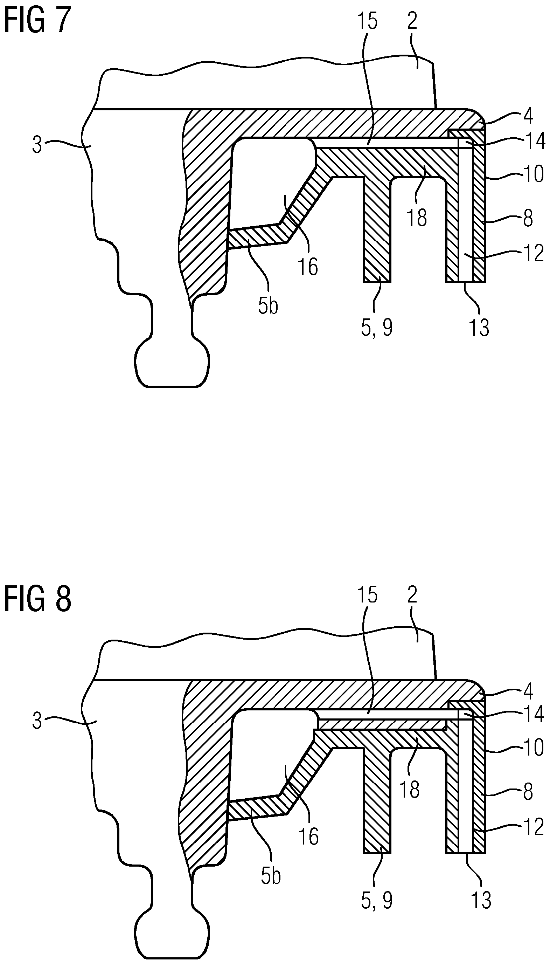

Figur 7 zeigt eine dritte Ausführungsform einer erfindungsgemäßen Leitschaufel 1, bei der die Plattform 3 aus einem Plattformbasisteil 4 und genau einem Plattformzusatzteil 5 zusammengesetzt ist, das additiv mittels selektiven Laserschmelzens hergestellt und mittels Schweißen mit dem Plattformbasisteil 4 verbunden ist. Das Plattformbasisteil 4 umfasst bei der dritten Ausführungsform gar keine Dichtlippe 8, 9. Anstatt dessen definiert das Plattformzusatzteil 5 zwei über eine Verstrebung 18 verbundene Dichtlippen 8, 9 und ein mit den Dichtlippen 8, 9 verbundenes Abschlussblech 5b der Plattform 3.

Zudem definiert das Plattformzusatzteil 5 die bereits im Zusammenhang mit den beiden vorherigen Ausführungsformen erwähnten Kühlkanäle 12 innerhalb der Dichtlippe 8 sowie den sich in Umfangsrichtung der Plattform 3 erstreckenden Verbindungskanal 14 vollständig. Die mittels eines additiven Fertigungsverfahrens ausgebildeten Kühlkanäle 12 sind sehr klein, was insbesondere von Vorteil ist, wenn sehr schmale Dichtlippen aktiv gekühlt werden sollen. In die Kühlkanäle 12 sind Turbulenzelemente eingebracht, die in Figur 7 der Übersichtlichkeit halber nicht gezeigt sind. Solche Turbulenzelemente ermöglichen eine genaue Anpassung des Wärmeübergangs an die jeweilige Belastung der Plattform 3.

Die ebenfalls bereits im Zusammenhang mit den beiden vorherigen Ausführungsformen erwähnten, sich in axialer Strömungsrichtung A erstreckenden Verbindungskanäle 15 sind bei der dritten Ausführungsform in das Plattformbasisteil 4 eingegossen und ebenso wie der Sammelkanal 16 teilweise durch das Plattformzusatzteil 5 definiert.

Wie in der Figur 8 zu sehen, ist das Plattformzusatzteil 5 derart an das Plattformbasisteil 4 geschweißt, dass die Kanäle 12, 14 des Plattformzusatzteils 5 mit den weiteren Kanälen 15, 16 in Fluidverbindung stehen.

Die in der Figur 8 gezeigte vierte Ausführungsform einer erfindungsgemäßen Leitschaufel 1 entspricht im Wesentlichen der dritten Ausführungsform. Der einzige Unterschied besteht darin, dass die sich in axialer Strömungsrichtung A erstreckenden Verbindungskanäle 15 bei der vierten Ausführungsform in das Plattformbasisteil 4 gebohrt und daher vollständig durch das Plattformbasisteil 4 definiert sind.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitschaufel (1) für eine Strömungsmaschine mit einem Schaufelblatt (2) und zumindest einer Plattform (3), mit der das Schaufelblatt (2) verbunden ist, wobei zur Kühlung der Plattform (3) und des Schaufelblattes (2) ein Kühlkanalsystem vorgesehen ist und wobei die Plattform (3) an ihrer blattabgewandten Seite zumindest eine von der Plattform abstehende Dichtlippe (8, 9) für eine Abdichtung zu einem rotierenden System der Strömungsmaschine umfasst,
wobei sich durch die Dichtlippe (8, 9) mindestens ein Kühlkanal (12) erstreckt, der einen Teil des Kühlkanalsystems bildet,
**dadurch gekennzeichnet, dass**
eine Mehrzahl von Kühlkanälen (12) vorgesehen ist, deren Austrittsöffnungen im freien Ende (13) der Dichtlippe angeordnet sind und
dass sich die Kühlkanäle (12) jeweils ausgehend von einem freien Ende (13) der Dichtlippe (8, 9) in zumindest im Wesentlichen radialer Richtung (R) und insbesondere zumindest im Wesentlichen parallel zueinander durch die Dichtlippe (8, 9) erstrecken.

2. Leitschaufel (1) nach Anspruch 1,
**dadurch gekennzeichnet, dass**
die zumindest eine Dichtlippe (8, 9) in einem in axialer Strömungsrichtung (A) vorderen oder hinteren Randbereich der Plattform (3) angeordnet ist und zumindest im Wesentlichen radial von der blattabgewandten Seite der Plattform (3) derart absteht, dass sie eine weitestgehend parallel zu der radialen Richtung (R) sich erstreckende Abschlussfläche (10) der Plattform (3) definiert.

3. Leitschaufel (1) nach Anspruch 1 oder 2,
**dadurch gekennzeichnet, dass**
beabstandet zu dem freien Ende (13) der Dichtlippe (8, 9) zumindest ein Verbindungskanal (14) vorgesehen ist, der die Mehrzahl von Kühlkanälen (12) miteinander verbindet und einen Teil des Kühlkanalsystems bildet.

4. Leitschaufel (1) nach einem der vorherigen Ansprüche,
**dadurch gekennzeichnet, dass**
die Plattform (3) aus einem Plattformbasisteil (4) und zumindest einem damit verbundenen, bevorzugt angeschweißten oder angelöteten, Plattformzusatzteil (5) zusammengesetzt ist, wobei der mindestens eine Kühlkanal (12) und bevorzugt weitere Teile (14, 15, 16) des Kühlkanalsystems zumindest teilweise durch das zumindest eine Plattformzusatzteil (5) definiert ist/sind.

5. Leitschaufel (1) nach Anspruch 4,
**dadurch gekennzeichnet, dass**
in dem Plattformbasisteil (4) mindestens eine Nut (11), insbesondere eine gießtechnisch hergestellte Nut (11), vorgesehen ist, die durch ein Plattformzusatzteil (5) in Form eines Blechs, insbesondere eines Metallblechs, abgedeckt ist, um zumindest den mindestens einen Kühlkanal (12) zu definieren.

6. Leitschaufel (1) nach einem der vorherigen Ansprüche,
**dadurch gekennzeichnet, dass**
die Plattform (3) zwei unmittelbar benachbarte Dichtlippen (8, 9) an ihrer blattabgewandten Seite umfasst, die sich insbesondere zumindest im Wesentlichen parallel und beabstandet zueinander erstrecken.

7. Leitschaufel (1) nach den Ansprüchen 5 und 6,
**dadurch gekennzeichnet, dass**
das Plattformzusatzteil (5) in Form eines U-förmigen Profilblechs (5a) vorgesehen ist, das derart zwischen den beiden Dichtlippen (8, 9) angeordnet ist, dass dessen gegenüberliegende Schenkel (6, 7) an den Dichtlippen (8, 9) flächig anliegen und die mindestens eine Nut (11) abdecken.

8. Leitschaufel (1) nach den Ansprüchen 5 und 6,
**dadurch gekennzeichnet, dass**
das Plattformzusatzteil (5) in Form eines U-förmigen Profilblechs (5a) vorgesehen ist, dessen erster Schenkel (6) flächig an einer ersten (8) der beiden Dichtlippen (8, 9) anliegt, um die darin vorgesehene mindestens eine Nut (11) abzudecken, und dessen zweiter Schenkel (7) mit einem Schenkel (17) eines weiteren Plattformzusatzteils (5) in Form eines Abschlussblechs (5b) verbunden, insbesondere daran geschweißt oder gelötet, ist, um die zweite (9) der beiden Dichtlippen (8, 9) durch die beiden verbundenen Schenkel (7, 17) zu definieren.

9. Leitschaufel (1) nach den Ansprüchen 5 und 6,
**dadurch gekennzeichnet, dass**
das Plattformzusatzteil (5) in Form eines einteiligen Profilblechs mit einem U-förmigen Abschnitt, dessen erster Schenkel flächig an einer ersten (8) der beiden Dichtlippen (8, 9) anliegt, um die darin vorgesehene mindestens eine Nut (11) abzudecken, und dessen zweiter Schenkel die zweite (9) der beiden Dichtlippen (8, 9) definiert, und einem sich daran anschließenden Abschlussblechabschnitt vorgesehen ist.

10. Leitschaufel (1) nach Anspruch 4,
**dadurch gekennzeichnet, dass**
das Plattformzusatzteil (5) additiv, bevorzugt mittels selektiven Laserschmelzens, SLM, hergestellt ist und zumindest den mindestens einen Kühlkanal (12) vollständig definiert.

11. Leitschaufel (1) nach Anspruch 10,
**dadurch gekennzeichnet, dass**
das Plattformzusatzteil (5) zwei über eine Verstrebung (18) verbundene Dichtlippen (8, 9) und ein mit den Dichtlippen (8, 9) verbundenes Abschlussblech (5b) definiert.

12. Leitschaufel (1) nach Anspruch 10 oder 11,
**dadurch gekennzeichnet, dass**
in den mindestens einen Kühlkanal (12) mindestens ein Turbulenzelement eingebracht ist.

13. Leitschaufel (1) nach einem der Ansprüche 4 bis 12,
**dadurch gekennzeichnet, dass**
das Plattformbasisteil (4) und/oder das zumindest eine Plattformzusatzteil (5) aus einer Superlegierung, bevorzugt einer Nickelbasis-Superlegierung, hergestellt ist/sind.

14. Leitschaufel (1) nach einem der Ansprüche 4 bis 12,
**dadurch gekennzeichnet, dass**
das Plattformbasisteil (4) und das zumindest eine Plattformzusatzteil (5) aus demselben Material, insbesondere aus einer Superlegierung, bevorzugt einer Nickelbasis-Superlegierung, hergestellt sind.

## Claims

1. Guide vane (1) for a turbomachine, having a vane blade (2) and at least one platform (3) to which the vane blade (2) is connected, wherein a cooling duct system for cooling the platform (3) and the vane blade (2) is provided, and wherein the platform (3), for sealing in relation to a rotating system of the turbomachine, on the side thereof that faces away from the blade comprises at least one seal lip (8, 9) that projects from the platform,
wherein at least one cooling duct (12) which forms part of the cooling duct system extends through the seal lip (8, 9), **characterized in that**
a plurality of cooling ducts (12) are provided, the exit openings of said cooling ducts (12) being disposed in the free end (13) of the seal lip, and
**in that** the cooling ducts (12), in each case proceeding from a free end (13) of the seal lip (8, 9), extend through the seal lip (8, 9) in at least a substantially radial direction (R) and in particular so as to be at least substantially mutually parallel.

2. Guide vane (1) according to Claim 1,
**characterized in that**
the at least one seal lip (8, 9) is disposed in a peripheral region of the platform (3) that is forward or rearward in the axial flow direction (A), and from the side of the platform (3) that faces away from the blade projects in at least a substantially radial manner such that said seal lip (8, 9) defines a terminating face (10) of the platform (3) that extends so as to be largely parallel to the radial direction (R).

3. Guide vane (1) according to Claim 1 or 2,
**characterized in that**
at least one connecting duct (14) which connects the plurality of cooling ducts (12) to one another and forms part of the cooling duct system is provided so as to be spaced apart from the free end (13) of the seal lip (8, 9).

4. Guide vane (1) according to one of the preceding claims,
**characterized in that**
the platform (3) is assembled from a platform base part (4) and at least one platform attachment part (5) that is connected, preferably welded or soldered/brazed, to said platform base part (4), wherein the at least one cooling duct (12) and preferably further parts (14, 15, 16) of the cooling duct system is/are at least in part defined by the at least one platform attachment part (5).

5. Guide vane (1) according to Claim 4,
**characterized in that**
at least one groove (11), in particular a groove (11) produced by casting technology, which in order for at least the at least one cooling duct (12) to be defined is covered by a platform attachment part (5) in the form of a plate, in particular a metal plate, is provided in the platform base part (4).

6. Guide vane (1) according to one of the preceding claims,
**characterized in that**
the platform (3) on the side thereof that faces away from the blade comprises two directly adjacent seal lips (8, 9) which extend so as to be in particular at least substantially mutually parallel and spaced apart.

7. Guide vane (1) according to Claims 5 and 6,
**characterized in that**
the platform attachment part (5) is provided in the form of a U-shaped profile plate (5a) which is disposed between the two seal lips (8, 9) in such a manner that the opposite legs (6, 7) of said U-shaped profile plate (5a) bear in a planar manner on the seal lips (8, 9) and cover the at least one groove (11).

8. Guide vane (1) according to Claims 5 and 6,
**characterized in that**
the platform attachment part (5) is provided in the form of a U-shaped profile plate (5a), the first leg (6) thereof bearing in a planar manner on a first (8) of the two seal lips (8, 9) in order for the at least one groove (11) provided therein to be covered, and the second leg (7) thereof being connected, in particular welded or soldered/brazed, to a leg (17) of a further platform attachment part (5) in the form of a termination plate (5b) in order for the second (9) of the two seal lips (8, 9) to be defined by the two connected legs (7, 17).

9. Guide vane (1) according to Claims 5 and 6,
**characterized in that**
the platform attachment part (5) is provided in the form of an integral profile plate having a U-shaped portion, the first leg thereof bearing in a planar manner on a first (8) of the two seal lips (8, 9) in order for the at least one groove (11) provided therein to be covered, and the second leg thereof defining the second (9) of the two seal lips (8, 9), and a termination plate portion that adjoins said integral profile plate.

10. Guide vane (1) according to Claim 4,
**characterized in that**
the platform attachment part (5) is produced in an additive manner, preferably by means of selective laser melting, SLM, and completely defines at least the at least one cooling duct (12).

11. Guide vane (1) according to Claim 10,
**characterized in that**
the platform attachment part (5) defines two seal lips (8, 9) that are connected by way of a brace (18) and a termination plate (5b) that is connected to the seal lips (8, 9).

12. Guide vane (1) according to Claim 10 or 11,
**characterized in that**
at least one turbulence element is incorporated in the at least one cooling duct (12).

13. Guide vane (1) according to one of Claims 4 to 12,
**characterized in that**
the platform base part (4) and/or the at least one platform attachment part (5) are/is produced from a super alloy, preferably a nickel-based super alloy.

14. Guide vane (1) according to one of Claims 4 to 12,
**characterized in that**
the platform base part (4) and the at least one platform attachment part (5) are produced from the same material, in particular from a super alloy, preferably a nickel-based super alloy.

## Revendications

1. Aube (1) directrice d'une turbomachine ayant un corps (2) d'aube et au moins une plateforme (3), à laquelle le corps (2) de l'aube est relié, dans laquelle il est prévu un système de conduit de refroidissement pour le refroidissement de la plateforme (3) et du corps (2) de l'aube et dans laquelle la plateforme (3) comprend, sur sa face loin du corps, au moins une lèvre (8, 9) d'étanchéité en saillie de la plateforme pour une étanchéité par rapport à un système tournant de la turbomachine, dans laquelle, dans la lèvre (8, 9) d'étanchéité, s'étend au moins un conduit (12) de refroidissement, qui forme une partie du système de conduit de refroidissement,
**caractérisée en ce qu'**
il est prévu une pluralité de conduits (12) de refroidissement, dont les ouvertures de sortie sont disposées à l'extrémité (13) libre de la lèvre d'étanchéité et
**en ce que** les conduits (12) de refroidissement s'étendent, respectivement, à partir d'une extrémité (13) libre de la lèvre (8, 9) d'étanchéité, dans au moins une direction (R) sensiblement radiale et notamment en étant sensiblement parallèles les uns aux autres, dans la lèvre (8, 9) d'étanchéité.

2. Aube (1) directrice suivant la revendication 1,
**caractérisée en ce que**
la au moins une lèvre (8, 9) d'étanchéité est disposée dans une partie de bord, avant ou arrière dans la direction (A) axiale d'écoulement, de la plateforme (3) et fait saillie, au moins sensiblement radialement du côté, loin du corps, de la plateforme (3), de manière à définir une surface (10) de fermeture, s'étendant dans une grande mesure parallèlement à la direction (R) radiale, de la plateforme (3).

3. Aube (1) directrice suivant la revendication 1 ou 2,
**caractérisée en ce qu'**
à distance de l'extrémité (13) libre de la lèvre (8, 9) d'étanchéité, est prévu au moins un conduit (14) de communication, qui met la pluralité de conduits (12) de refroidissement en communication entre eux et qui forme une partie du système de conduit de refroidissement.

4. Aube (1) directrice suivant l'une des revendications précédentes,
**caractérisée en ce que**
la plateforme (3) est composée d'une partie (4) de base et d'au moins une partie (5) supplémentaire, qui y est reliée, en y étant de préférence soudée ou brasée, le au moins un conduit (12) de refroidissement, et de préférence d'autres parties (14, 15, 16) du système de conduit de refroidissement, étant défini, au moins en partie, par la au moins une partie (5) supplémentaire de la plateforme.

5. Aube (1) directrice suivant la revendication 4,
**caractérisée en ce que**,
dans la partie (4) de base de la plateforme, est prévue au moins une rainure (11), notamment une rainure (11) fabriquée en technique de coulée, qui est recouverte par une partie (5) supplémentaire de la plateforme sous la forme d'une tôle, notamment d'une tôle métallique, afin de définir au moins le au moins un conduit (12) de refroidissement.

6. Aube (1) directrice suivant l'une des revendications précédentes,
**caractérisée en ce que**
la plateforme (3) comprend, sur son côté loin du corps, deux lèvres (8, 9) d'étanchéité directement voisines, qui s'étendent notamment en étant au moins sensiblement parallèles et à distance l'une de l'autre.

7. Aube (1) directrice suivant les revendications 5 et 6,
**caractérisée en ce que**
la partie (5) supplémentaire de la plateforme est prévue sous la forme d'une tôle (5a) profilée en forme de U, qui est disposée entre les deux lèvres (8, 9) d'étanchéité, de manière à ce que ses branches (6, 7) opposées s'appliquent suivant une surface aux lèvres (8, 9) d'étanchéité et recouvrent la au moins une rainure (11).

8. Aube (1) directrice suivant les revendications 5 et 6,
**caractérisée en ce que**
la partie (5) supplémentaire de la plateforme est prévue sous la forme d'une tôle (5a) profilée en forme de U, dont la première branche (6) s'applique suivant une surface à une première (8) des deux lèvres (8, 9) d'étanchéité pour recouvrir la au moins une rainure (11), qui y est prévue, et dont la deuxième branche (7) est reliée, en y étant notamment soudée ou brasée, à une branche (17) d'une autre partie (5) supplémentaire de la plateforme sous la forme d'une tôle (5b) de fermeture, afin de définir la deuxième (9) des deux lèvres (8, 9) d'étanchéité par les deux branches (7, 17) reliées.

9. Aube (1) directrice suivant les revendications 5 et 6,
**caractérisée en ce que**
la partie (5) supplémentaire de la plateforme est prévue sous la forme d'une tôle profilée d'un seul tenant, ayant une partie en forme de U, dont la première branche s'applique par une surface à une première (8) des deux lèvres (8, 9) d'étanchéité, afin de recouvrir au moins une rainure (11), qui y est prévue, et dont la deuxième branche définit la deuxième (9) des deux lèvres (8, 9) d'étanchéité, et une partie de tôle de fermeture s'y raccordant.

10. Aube (1) directrice suivant la revendication 4,
**caractérisée en ce que**
la partie (5) supplémentaire de la plateforme est fabriquée additivement, de préférence au moyen d'une fusion laser sélective, SLM, et définit complètement le au moins un conduit (12) de refroidissement.

11. Aube (1) directrice suivant la revendication 10,
**caractérisée en ce que**
la partie (5) supplémentaire de la plateforme définit deux lèvres (8, 9) d'étanchéité reliées par un entretoisement (18) et une tôle (5b) de fermeture reliée aux lèvres (8, 9) d'étanchéité.

12. Aube (1) directrice suivant la revendication 10 ou 11,
**caractérisée en ce qu'**
au moins un élément de turbulence est introduit dans le au moins un conduit (12) de refroidissement.

13. Aube (1) directrice suivant l'une des revendications 4 à 12,
**caractérisée en ce que**
la partie (4) de base de la plateforme et/ou la au moins une partie (5) supplémentaire de la plateforme est/sont en un super alliage, de préférence en un super alliage à base de nickel.

14. Aube (1) directrice suivant l'une des revendications 4 à 12,
**caractérisée en ce que**
la partie (4) de base de la plateforme et la au moins une partie (5) supplémentaire de la plateforme sont en le même matériau, notamment en un super alliage, de préférence en un super alliage à base de nickel.
